# EUROPÄISCHE PATENTSCHRIFT

(11) **EP 2 347 133 B1**
(45) Veröffentlichungstag und Bekanntmachung des Hinweises auf die Patenterteilung: **19.12.2012**
(21) Anmeldenummer: 09781015.4
(22) Anmeldetag: 24.07.2009
(51) Int. Cl.: F04C 29/12

(54) **VAKUUMPUMPE**
VACUUM PUMP
POMPE À VIDE

(30) Priorität: 20.11.2008 DE 102008059227
(43) Veröffentlichungstag der Anmeldung: 27.07.2011
(73) Patentinhaber: Joma-Polytec GmbH, 72411 Bodelshausen (DE)
(72) Erfinder: HESS, Bernd, 72622 Nürtingen (DE); SCHNEIDER, Willi, 72411 Bodelshausen (DE)
(74) Vertreter: Dreiss
(86) Internationale Anmeldenummer: PCT/EP2009/059539
(87) Internationale Veröffentlichungsnummer: WO 2010/057688

(56) Entgegenhaltungen:
- EP-A1- 0 769 650
- WO-A1-2008/009251
- DE-A1- 3 105 665
- FR-A1- 2 815 384

## Beschreibung

Die Erfindung betrifft eine Vakuumpumpe, insbesondere eine Flügelzellenpumpe, mit einem Pumpengehäuse, in welchem ein Saugraum vorgesehen ist, und einem in den Saugraum einmündenden Pumpengehäusedurchbruch, wobei im Pumpengehäusedurchbruch ein ins Freie oder in einen externen Unterdruckraum mündendes Saug-Rückschlagventil angeordnet ist, welches in einem topförmigen Ventilgehäuse untergebracht ist und das topfförmige Ventilgehäuse einen Gehäusemantel aufweist, wie in der FR 2815 384 offenbart, die als nächstliegender Stand der Technik angesehen wird.

Aus der WO 2008/009251 A1 ist eine auch Vakuumpumpe mit einem derartigen Aufbau bekannt geworden. Mit dieser Vakuumpumpe wird Luft aus einem Unterdruckraum, zum Beispiel einem Bremskraftverstärker, abgesaugt, wobei der Saugraum innerhalb der Vakuumpumpe von Flügelzellen gebildet wird. Um eine Rückströmung zu verhindern, ist die Vakuumpumpe mit einem Saug-Rückschlagventil ausgestattet, welches in einem Pumpengehäusedurchbruch angeordnet ist. Dieses Saug-Rückschlagventil ist hülsenartig ausgebildet und besitzt ein topfförmiges Ventilgehäuse mit einem Gehäusemantel und einem Gehäuseboden, wobei der Gehäuseboden in das Pumpengehäuse der Vakuumpumpe eingesetzt ist. Auf das freie Ende des Saug-Rückschlagventils, welches aus dem Pumpengehäuse der Vakuumpumpe herausragt, wird zum Beispiel ein Unterdruckschlauch aufgeschoben. Die Abdichtung des Saug-Rückschlagventils im Pumpengehäusedurchbruch erfolgt zum Beispiel mittels Dichtungselementen, zum Beispiel O-Ringen. Bei der oben genannten bekannten Vakuumpumpe wird das Saug-Rückschlagventil dadurch am Pumpengehäuse und im Pumpengehäusedurchbruch gehalten, dass ein Flansch des Saug-Rückschlagventils vom Rand des Pumpengehäusedurchbruchs übergriffen wird, so dass das freie Ende des Randes umgebördelt oder verstemmt werden kann, so dass der Flansch im Pumpengehäusedurchbruch festgehalten wird. Die Befestigung des Saug-Rückschlagventils erfordert daher einen zusätzlichen Arbeitsgang und zusätzliche Werkzeuge. Außerdem wird das Pumpengehäuse verformt. Es muss daher aus einem plastisch verformbaren Material bestehen und darf nicht spröde sein.

Als nachteilig wird angesehen, dass das Saug-Rückschlagventil mittels eines gesonderten Arbeitsganges am Pumpengehäuse befestigt werden muss. Außerdem muss das Pumpengehäuse aus einem plastisch verformbaren Material bestehen.

Der Erfindung liegt daher die Aufgabe zugrunde, eine Vakuumpumpe bereitzustellen, an welcher das Saug-Rückschlagventil einfacher befestigbar ist.

Diese Aufgabe wird mit einer Vakuumpumpe der eingangs genannten Art erfindungsgemäß dadurch gelöst, dass das Saug-Rückschlagventil im Pumpengehäusedurchbruch verrastbar ist.

Bei der erfindungsgemäßen Vakuumpumpe wird das Saug-Rückschlagventil in den Pumpengehäusedurchbruch nicht nur eingesetzt sondern verrastet dabei auch mit dem Pumpengehäuse. Es bedarf also keines zusätzlichen Arbeitsganges, mit welchem das Saug-Rückschlagventil am Pumpengehäuse verliersicher befestigt wird. Insbesondere muss weder das Saug-Rückschlagventil noch das Gehäuse der Vakuumpumpe verformt oder auf andere Weise verändert werden, um das Saug-Rückschlagventil festzulegen. Es sind auch keine Haftvermittler, wie Klebstoffe oder dergleichen zur Befestigung erforderlich. Die Montage des Saug-Rückschlagventils am Pumpengehäuse kann dadurch nicht nur schneller und einfacher, sondern auch maschinell erfolgen.

Erfindungsgemäß ist vorgesehen, dass das Saug-Rückschlagventil und/oder der Pumpengehäusedurchbruch wenigstens eine Hinterschneidung oder eine Umfangsnut aufweist. Diese Hinterschneidung dient dazu, ein Rastmittel aufzunehmen, sobald dieses Rastmittel in die Hinterschneidung eingreift. Dabei ist das Rastmittel so ausgebildet, dass es aus der Hinterschneidung nicht selbsttätig freigegeben wird und dadurch eine Ausziehverhinderung für das Saug-Rückschlagventil bildet.

Diese Umfangsnut ist beim Pumpengehäusedurchbruch als Innenumfangsnut und beim Saug-Rückschlagventil als Außenumfangsnut ausgebildet und dient dazu, ein Rastelement des Rasthakens aufzunehmen. Dabei kann die Umfangsnut vollständig umlaufend ausgebildet sein, so dass eine Drehung des eingeschobenen und verrastenden Saug-Rückschlagventils nicht behindert wird.

Es besteht aber auch die Möglichkeit, dass sich die Umfangsnut lediglich über einen Teilbereich des Umfangs erstreckt, so dass das Saug-Rückschlagventil nicht nur in axialer Richtung, das heißt in Einschub- beziehungsweise Auszugrichtung, sondern auch in Drehrichtung fixiert wird. Ein Verdrehen des Saug-Rückschlagventils innerhalb des Pumpengehäusedurchbruchs wird auf diese Weise verhindert.

Erfindungsgemäß ist das Saug-Rückschfagventil und/oder der Pumpengehäusedurchbruch mit wenigstens einem Rasthaken versehen. Dieser Rasthaken ist so angeordnet, dass das Saug-Rückschlagventil problemlos in den Pumpengehäusedurchbruch eingeschoben werden kann und dadurch der Rasthaken ausgelenkt wird. Der Rasthaken gelangt dann, wenn das Saug-Rückschlagventil vollständig in den Pumpengehäusedurchbruch eingeschoben wird, in den Bereich der Hinterschneidung und greift in diese ein. Die Hinterschneidung ist so geformt, dass sie hinter den Rasthaken greift und diesen blockiert oder festhält. Ein Auszug des Saug-Rückschlagventils aus dem Pumpengehäusedurchbruch wird auf diese Weise verhindert.

Bei einer Weiterbildung der Erfindung ist der Rasthaken radial außerhalb des Gehäusemantels angeordnet. Der Gehäusemantel bildet die fluiddichte Verbindung zum Beispiel zwischen einem außerhalb der Vakuumpumpe verlegten Unterdruckschlauch und dem Saugraum und der Rasthaken dient lediglich zur verrastenden Fixierung des Saug-Rückschlagventils am Pumpengehäuse. Vorzugsweise ist dieser so angeordnet, dass er nach dem Einschub des Saug-Rückschlagventils in den Pumpengehäusedurchbruch nicht mehr von außen zugänglich ist. Ein Entfernen des Saug-Rückschlagventils vom Pumpengehäuse kann nur durch Zerstörung des Saug-Rückschlagventils erfolgen.

Erfindungsgemäß weist der Rasthaken einen gegenüber dem Gehäusemantel des Saug-Rückschlagventils radial verschwenkbaren Rastfinger mit einer endständigen Rastnase auf. Insbesondere die Rastnase überragt die Außenkontur des Gehäusemantels in radialer Richtung, so dass die Rastnase beim Einschub des Saug-Rückschlagventils zunächst radial verdrängt wird und dann bei vollständigem Einschub des Saug-Rückschlagventils in den Pumpengehäusedurchbruch in eine hierfür vorgesehene Aufnahme, insbesondere in eine Hinterschneidung radial ausschnappt.

Weiterhin liegt die Rastnase (48) des Rasthakens (44) in Abzugsrichtung vor einem einstückig am Gehäusemantel angeformten Ende des Rasthakens, so dass der Rasthaken bei Zug auf das Saug-Rückschlagventil (24) auf Druck belastet wird.

Bei einer Variante der Erfindung ist vorgesehen, dass die Hinterschneidung von wenigstens einem Durchbruch im Pumpengehäuse gebildet wird. In diesen Durchbruch rasten die Rastnasen der Rastfinger ein. Das Saug-Rückschlagventil ist nunmehr nicht nur sicher am Pumpengehäuse befestigt sondern auch gegen Verdrehen gesichert.

Ein Lösen des Saug-Rückschlagventils erfolgt dadurch, dass von außen in den Durchbruch ein die Rastnase aus dem Durchbruch aushebendes Werkzeug einsetzbar ist.

Eine andere zum Lösen des Saug-Rückschlagventils sieht vor, dass im Pumpengehäuse eine Innenumfangsnut vorgesehen ist, die in radialer Richtung zumindest abschnittsweise parallel neben und in Einschubrichtung des Saug-Rückschlagventils hinter dem Durchbruch verläuft und die in Umfangsrichtung in den Innenumfang des Pumpengehäusedurchbruchs ausläuft. Wird das mit dem Pumpengehäuse verrastete Saug-Rückschlagventil weiter in das Pumpengehäuse eingeschoben, dann gleiten die, eine Schräge aufweisenden Rastnasen aus dem Durchbruch heraus und gelangen in die Innenumfangsnut. Nunmehr kann das Saug-Rückschlagventil verdreht werden, wodurch die Rastnasen aus der Innenumfangsnut ausgehoben werden und an der absatzfreien Innenumfangsfläche des Pumpengehäusedurchbruchs anliegen. Das Saug-Rückschlagventil kann nun abgezogen werden. Ein sicherer Halt des Saug-Rückschlagventils im Pumpengehäuse gewährleistet eine Stützfeder, die auf die Stirnseite des Saug-Rückschlagventils wirkt und beim Einschieben des Saug-Rückschlagventils vorgespannt wird. Die Verrastung funktioniert nach Art einer Bajonettverriegelung.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:

Figur 1 einen Längsschnitt I-I gemäß Figur 2 durch ein in ein Pumpengehäuse eingesetztes Saug-Rückschlagventil;

Figur 2 eine Seitenansicht des Saug-Rückschlagventils;

Figur 3 einen Längsschnitt durch ein in ein Pumpengehäuse eingesetztes Saug-Rückschlagventil gemäß einer zweiten Ausführungsform;

Figur 4 einen Querschnitt IV-IV gemäß Figur 3;

Figur 5 die Ansicht gemäß Figur 3 mir eingesetzten Werkzeugen zum Lösen der Verrastung; und

Figur 6 einen Querschnitt VI-VI gemäß Figur 3.

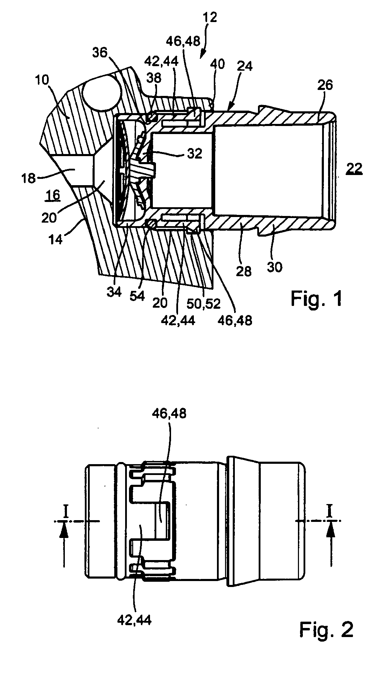

Die Figur 1 zeigt andeutungsweise einen Abschnitt eines insgesamt mit 10 bezeichneten Pumpengehäuses einer Vakuumpumpe 12, wobei mit 14 die Innenumfangsfläche eines Saugraums 16 bezeichnet ist. In diesen Saugraum 16 mündet ein Kanal 18 eines Pumpengehäusedurchbruchs 20, welcher ins Freie 22 ausmündet. In diesen Pumpengehäusedurchbruch 20 ist ein Saug-Rückschlagventil 24 eingesetzt, auf dessen freies Ende 26 ein (nicht dargestellter) Saugschlauch aufgeschoben werden kann. Das im Längsschnitt dargestellte Saug-Rückschlagventil 24 besitzt ein Ventilgehäuse 28, welches topfförmig ausgebildet ist und im Wesentlichen von einem Gehäusemantel 30 und einem Gehäuseboden 32 gebildet wird. Der Gehäusemantel 30 erstreckt sich über den Gehäuseboden 32 hinaus in einen Rand 34, welcher den Gehäuseboden 32 auf dessen gegenüberliegenden Seite überragt. Zur fluiddichten Aufnahme des Saug-Rückschlagventils 24 im Pumpengehäusedurchbruch 20 ist das Ventilgehäuse 28 mit einer Umfangsnut 36 versehen, in welche ein Dichtungsring 38, insbesondere ein O-Ring, eingesetzt ist.

In Figur 1 ist deutlich erkennbar, dass das Saug-Rückschlagventil 24 mit seinem Rand 34 in radialer Richtung passgenau in den Pumpengehäusedurchbruch 20 eingesetzt ist. Außerdem liegt der Gehäusemantel 30 am freien Ende 40 des Pumpengehäusedurchbruchs 20 an, so dass das Saug-Rückschlagventil 24 in radialer Richtung spielfrei im Pumpengehäusedurchbruch 20 sitzt.

Sowohl aus der Figur 1 als auch aus der Figur 2 ist erkennbar, dass das Saug-Rückschlagventil 24 mit einem Rastmittel 42 versehen ist, welches als Rasthaken 44 ausgebildet ist, der sich im Wesentlichen an der Außenseite des Gehäusemantels 30 in axialer Richtung erstreckt und mit seinem einen Ende einstückig am Gehäusemantel 30 angeformt ist und mit seinem anderen, freien Ende 46 den Außenumfang beziehungsweise die Außenkontur des Gehäusemantels 30 radial überragt. Das freie Ende 46 des Rasthakens 44 ist nach Art einer Rastnase 48 ausgebildet und greift in eine Hinterschneidung 50, die an der Innenumfangsfläche im Bereich des freien Endes 40 des Pumpengehäusedurchbruchs 20 vorgesehen ist. Die Hinterschneidung 50 ist als Innenumfangsnut 52 ausgestaltet.

Hervorzuheben ist noch, dass der Durchmesser des Pumpengehäusedurchbruchs 20 im Bereich des Dichtungsrings 28 einen Absatz 54 aufweist, das heißt dass der Durchmesser des Pumpengehäusedurchbruchs 20 in Einschubrichtung kleiner wird. Der Dichtungsring 38 liegt somit an der Absatzkante 54 an, wodurch zum einen der Vorteil erzielt wird, dass die Absatzkante 54 eine höhere Dichtwirkung bewirkt, als wenn der Dichtungsring 38 flächig an der Innenfläche des Pumpengehäusedurchbruchs 20 anliegen würde. Außerdem dient der Dichtungsring 38 nicht nur als Dichtmittel zur fluiddichten Abdichtung des Saug-Rückschlagventils 24 im Pumpengehäusedurchbruch 20 sondern dient auch als Vorspannmittel, so dass das Saug-Rückschlagventil 24 dann, wenn der Dichtungsring 38 an der Absatzkante 54 anliegt, in Ausschubrichtung vorgespannt wird. Dadurch wird sichergestellt, dass die Rastnasen 48 (in axialer Richtung gesehen) spielfrei in die Innenumfangsnut 52 eingreifen und somit das Saug-Rückschlagventil 24 in axialer Richtung spielfrei im Pumpengehäusedurchbruch 20 festgelegt ist.

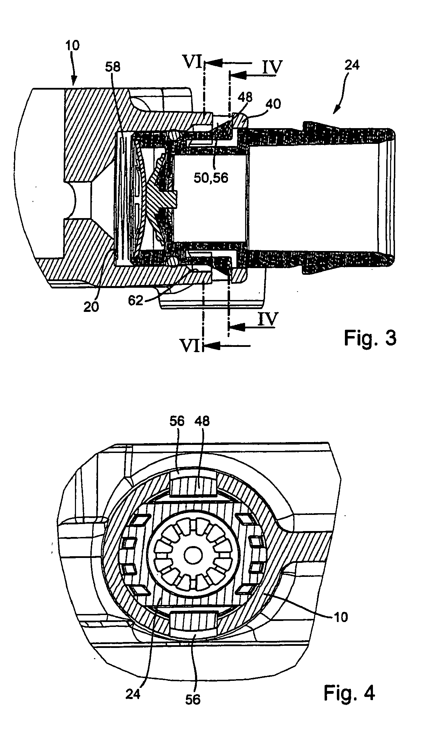

Die Figur 3 zeigt eine Variante, bei der die Hinterschneidung von zwei einander gegenüber liegenden Durchbrüchen 56 gebildet wird. Jeder Durchbruch erstreckt sich, wie aus der Figur 4 ersichtlich, über etwa 30° in Umfangsrichtung geringfügig unterhalb des freien Endes 40 des Pumpengehäuses 10. In diesen Durchbruch 56 greifen bei eingesetztem Saug-Rückschlagventil 24 die Rastnasen 48 der Rastfinger. Weiterhin ist erkennbar, dass an der Stirnseite des Saug-Rückschlagventils 24 eine Wendelfeder 58 anliegt, die beim Einschieben des Saug-Rückschlagventils 24 am Grund des Pumpengehäusedurchbruchs 20 komprimiert wird.

Die Breite der Rastnase 48 entspricht der Breite des Durchbruchs 56, was deutlich in Figur 4 erkennbar ist. Dadurch wird bei eingerastetem Saug-Rückschlagventil 24 ein Verdrehen des Saug-Rückschlagventils 24 verhindert.

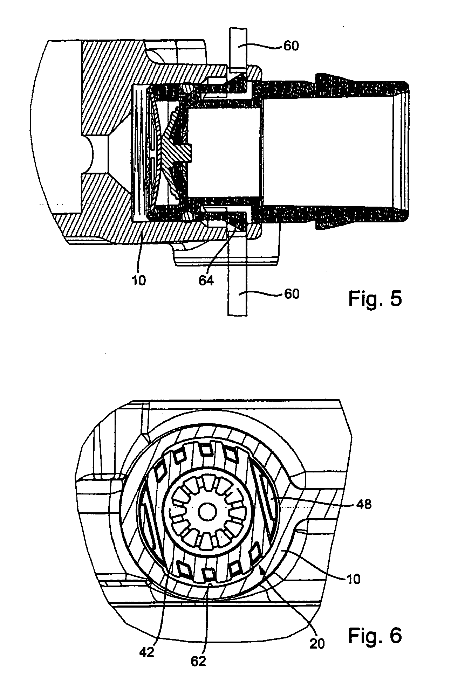

Ein Lösen der Verrastung erfolgt mittels eines Werkzeugs 60, das von außen radial in den (in jeden) Durchbruch 56 eingesetzt wird (Figur 5). Mittels dieses Werkzeugs 60 werden die Rastnasen 48 radial ein- und aus dem Durchbruch 56 heraus gedrückt, so dass sie vom freien Ende 40 des Pumpengehäuses 10 nicht mehr übergriffen werden. Das Saug-Rückschlagventil 24 kann nunmehr abgezogen werden, bzw. das Saug-Rückschlagventil 24 wird von der Wendelfeder 58 aus dem Pumpengehäusedurchbruch 20 ausgeschoben.

Eine andere Variante für ein Lösen der Verrastung sieht eine Innenumfangsnut 62 (Figuren 3 und 6) vor, die sich in Einschubrichtung des Saug-Rückschlagventils 24 direkt an den Durchbruch 56 oder allgemein an die Hinterschneidung 50 anschließt und einen größeren Durchmesser besitzt als der Durchmesser des freien Endes 40 des Pumpengehäuses 10 bzw. des Pumpengehäusedurchbruches 20. Die Innenumfangsnut erstreckt sich über einen Teil des Innenumfanges und läuft auf den Durchmesser des Pumpengehäusedurchbruches 20 aus. Wird das Saug-Rückschlagventil 24 eingeschoben, gelangen die Rastnasen 48in die Innenumfangsnut 62. Wird das Saug-Rückschlagventil 24 dann z.B. um 30 gedreht, werden die Rastnasen 48 aus der Innenumfangsnut 62 ausgehoben und liegen an der Innenfläche des Pumpengehäusedurchbruches 20, wie in Figur 6 dargestellt, an. Das Saug-Rückschlagventil 24 kann nunmehr abgezogen werden.

Es besteht auch die Möglichkeit, die Rastnase 48 ohne Schräge 64 sondern quaderförmig auszugestalten. Ein Einschub des Saug-Rückschlagventils 24 in den Pumpengehäusedurchbruch 20 ohne Werkzeug 60 ist dann nicht mehr möglich. Das freie Ende 40 des Pumpengehäuses 10 ist dann mit einer trichterförmigen Einschubschräge versehen. Schließlich kann bei einfachen Ausführungsformen auch ganz auf die Innenumfangsnut 62 verzichtet werden.

## Patentansprüche

1. Vakuumpumpe (12), insbesondere Flügelzellenpumpe, mit einem Pumpengehäuse (10), in welchem ein Saugraum (16) vorgesehen ist, und einem in den Saugraum (16) einmündenden Pumpengehäusedurchbruch (20), wobei im Pumpengehäusedurchbruch (20) ein ins Freie (22) oder in einen externen Unterdruckraum mündendes Saug-Rückschlagventil (24) angeordnet ist, welches in einem topfförmigen Ventilgehäuse (28) untergebracht ist und das topfförmige Ventilgehäuse (28) einen Gehäusemantel (30) aufweist, wobei das Saug-Rückschlagventil (24) im Pumpengehäusedurchbruch (20) verrastbar ist, das Saug-Rückschlagventil (24) und/oder der Pumpengehäusedurchbruch (20) wenigstens eine Hinterschneidung (50) oder eine Umfangsnut (52) aufweist, die an der Außenseite des Gehäusemantels (30) und/oder an der Innenseite des Pumpengehäusedurchbruchs (20) vorgesehen ist, dass das Saug-Rückschlagventil (24) und/oder der Pumpengehäusedurchbruch (20) mit wenigstens einem Rasthaken (44) versehen ist, der einen gegenüber dem Gehäusemantel (30) radial verschwenkbaren Rastfinger mit einer Rastnase (48) aufweist und der Rastfinger beim Einsetzen des Saug-Rückschlagventils (24) in den Pumpengehäusedurchbruch (20) in die Umfangsnut (52) einrastet, **dadurch gekennzeichnet, dass** in Auszugsrichtung die Rastnase (48) des Rasthakens (44) vor einem einstückig am Gehäusemantel angeformten Ende des Rasthakens (44) liegt, so dass der Rasthaken (44) bei Zug auf das Saug-Rückschlagventil (24) auf Druck belastet wird.

2. Vakuumpumpe nach Anspruch 1, **dadurch gekennzeichnet, dass** der Rasthaken (44) radial außerhalb des Gehäusemantels (30) angeordnet ist.

3. Vakuumpumpe nach Anspruch 1 oder 2, **dadurch gekennzeichnet, dass** die Rastnase (48) einen quadratischen Querschnitt aufweist oder mit einer Schräge (64) versehen ist.

4. Vakuumpumpe nach einem der vorhergehenden Ansprüche,
**dadurch gekennzeichnet, dass** die Verrastung eine Verdrehsicherung für das Saug-Rückschlagventil (24) bildet.

5. Vakuumpumpe nach einem der vorhergehenden Ansprüche,
**dadurch gekennzeichnet, dass** der Gehäusemantel (30) eine Umfangsnut (36) mit einem darin eingesetzten Dichtungsring (38) aufweist, und der Dichtungsring (38) sich an einer Absatzkante (54) des Pumpengehäusedurchbruchs (20) abstützt und ein das Saug-Rückschlagventil (24) in Auszugrichtung vorspannendes Vorspannmittel bildet.

6. Vakuumpumpe nach einem der vorhergehenden Ansprüche,
**dadurch gekennzeichnet, dass** die Hinterschneidung (50) von wenigstens einem Durchbruch (56) im Pumpengehäuse (10) gebildet wird.

7. Vakuumpumpe nach Anspruch 6, **dadurch gekennzeichnet, dass** in den Durchbruch (56) ein die Rastnase (48) aus dem Durchbruch (56) aushebendes Werkzeug (60) einsetzbar ist.

8. Vakuumpumpe nach Anspruch 6 oder 7, **dadurch gekennzeichnet, dass** eine Innenumfangsnut (62) vorgesehen ist, die in radialer Richtung zumindest abschnittsweise parallel neben und in Einschubrichtung des Saug-Rückschlagventils (24) hinter dem Durchbruch (56) verläuft und die in Umfangsrichtung in die Innenumfangsfläche des Pumpengehäusedurchbruchs (20) ausläuft.

## Claims

1. Vacuum pump (12), and in particular a vane pump, having a pump casing (10) in which a suction chamber (16) is provided and having an aperture (20) in the pump casing which opens into the suction chamber, there being arranged in the aperture (20) in the pump casing a suction non-return valve (24) which opens into free air (22) or into an external space under vacuum and which is housed in a cup-like valve housing (28), and the cup-like valve housing (28) having a shell (30), the suction non-return valve (24) being able to be latched into the aperture (20) in the pump casing, the suction non-return valve (24) and/or the aperture (20) in the pump casing having at least one undercut (50) or circumferential groove (52) which is provided on the outside of the housing shell (30) and/or on the inside of the aperture (20) in the pump casing, and the suction non-return valve (24) and/or the aperture (20) in the pump casing being provided with at least one latching hook (44), having a latching nose (48), which has a latching finger able to pivot radially relative to the housing shell (30), and the latching finger latching into the circumferential groove (52) when the suction non-return valve (24) is inserted in the aperture (20) in the pump casing, **characterised in that** the latching nose (48) of the latching hook (44) is situated in front, in the direction of withdrawal, of an end of the latching hook (44) which is integrally formed with the housing shell, the latching hook (44) thus being stressed in compression when there is tension on the suction non-return valve (24).

2. Vacuum pump according to claim 1, **characterised in that** the latching hook (44) is arranged radially outside the housing shell (30).

3. Vacuum pump according to claim 1 or 2, **characterised in that** the latching nose (48) is square in cross-section or is provided with a bevel (64).

4. Vacuum pump according to one of the preceding claims, **characterised in that** the latching arrangement forms an anti-rotation lock for the suction non-return valve (24).

5. Vacuum pump according to one of the preceding claims, **characterised in that** the housing shell (30) has a circumferential groove (36) having a sealing ring (38) inserted therein, and the sealing ring (38) is supported against a stepped edge (54) in the aperture (20) in the pump casing and forms a pre-loading means which pre-loads the suction non-return valve (24) in the direction of withdrawal.

6. Vacuum pump according to one of the preceding claims, **characterised in that** the undercut (50) is formed by at least one aperture (56) in the pump casing (10).

7. Vacuum pump according to claim 6, **characterised in that** a tool (60) which lifts the latching nose (48) out of the aperture (56) can be inserted in the aperture (56).

8. Vacuum pump according to claim 6 or 7, **characterised in that** an internal circumferential groove (62) is provided of which at least a portion extends in the radial direction parallel and next to the aperture (56) and behind it in the direction of insertion of the suction non-return valve (24) and which ends in the circumferential direction at the inner circumferential surface of the aperture (20) in the pump casing.

## Revendications

1. Pompe à vide (12), plus particulièrement une pompe à palettes, avec un carter de pompe (10) dans lequel une chambre d'aspiration (16) est prévue, et une percée dans le carter de pompe (20) débouche dans la chambre d'aspiration (16), moyennant quoi, dans la percée du carter de la pompe (20), se trouve un clapet anti-retour d'aspiration (24) débouchant à l'air libre (22) ou dans une chambre de dépression externe, logé dans un boîtier de clapet en forme de cloche (28) et ce boîtier de clapet en forme de cloche (28) comprend une enveloppe de boîtier (30), moyennant quoi le clapet anti-retour d'aspiration (24) peut être encliqueté dans la percée du carter de la pompe (20), le clapet anti-retour d'aspiration (24) et/ou la percée du carter de la pompe (20) comprend au moins une contre-dépouille (50) ou une rainure périphérique (52), réalisée à l'extérieur de l'enveloppe du boîtier (30) et/ou à l'intérieur de la percée du carter de la pompe (20), le clapet anti-retour d'aspiration (24) et/ou la percée du carter de la pompe (20) est muni d'au moins un crochet d'encliquetage (44) qui comprend un doigt d'encliquetage pivotant radialement par rapport à l'enveloppe du boîtier (30) avec un embout d'encliquetage (48) et le doigt d'encliquetage s'encliquète dans la rainure périphérique (52) lors de l'insertion du clapet anti-retour d'aspiration (24) dans la percée du carter de la pompe (20), **caractérisée en ce que**, dans la direction d'extraction, l'embout d'encliquetage (48) du crochet d'encliquetage (44) se trouve devant une extrémité du crochet d'encliquetage (44) formée d'une seule pièce avec l'enveloppe du boîtier, de façon à ce que le crochet d'encliquetage (44) soit sollicité en pression lors d'une traction sur le clapet anti-retour d'aspiration (24).

2. Pompe à vide selon la revendication 1, **caractérisée en ce que** le crochet d'encliquetage (44) est disposé radialement à l'extérieur de l'enveloppe du boîtier (30).

3. Pompe à vide selon la revendication 1 ou 2, **caractérisée en ce que** l'embout d'encliquetage (48) présente une section carrée ou bien est muni d'un biseau (64).

4. Pompe à vide selon l'une des revendications précédentes, **caractérisée en ce que** l'encliquetage constitue un dispositif anti-torsion pour le clapet anti-retour d'aspiration (24).

5. Pompe à vide selon l'une des revendications précédentes, **caractérisée en ce que** l'enveloppe du boîtier (30) présente une rainure périphérique (36) avec une bague d'étanchéité (38) insérée à l'intérieur et la bague d'étanchéité (38) s'appuie contre une arête d'épaulement (54) de la percée du carter de la pompe (20) et constitue un moyen de précontrainte exerçant une contrainte sur le clapet anti-retour d'aspiration (24) dans la direction d'extraction.

6. Pompe à vide selon l'une des revendications précédentes, **caractérisée en ce que** la contre-dépouille (50) est constituée d'au moins une percée (56) dans le carter de la pompe (10).

7. Pompe à vide selon la revendication 6, **caractérisée en ce que**, dans la percée (56), un outil (60) soulevant l'embout d'encliquetage (48) de la percée (56) peut être inséré.

8. Pompe à vide selon la revendication 6 ou 7, **caractérisée en ce qu'**une rainure périphérique (62) est prévue, qui passe parallèlement, au moins en partie dans la direction radiale, à proximité et dans la direction de poussée du clapet anti-retour d'aspiration (24) derrière la percée (56) et qui sort dans la direction périphérique dans la surface périphérique interne de la percée du carter de la pompe (20).
